# EUROPEAN PATENT SPECIFICATION

(11) **EP 1 692 386 B1**
(45) Date of publication and mention of the grant of the patent: **21.03.2007**
(21) Application number: 04803752.7
(22) Date of filing: 10.12.2004
(51) Int. Cl.: F02F 11/00, F16J 15/06, F16J 15/08

(54) **METALLIC FLAT GASKET WITH STRIP CONDUCTOR AND SENSOR ELEMENT AND USE THEREOF**
METALLFLACHDICHTUNG MIT STREIFENLEITER UND SENSORELEMENT UND VERWENDUNG DAVON
GARNITURE METALLIQUE D'ETANCHEITE PLATE POURVUE D'UNE PISTE CONDUCTIVE ET D'UN ELEMENT DETECTEUR, ET SON UTILISATION

(30) Priority: 11.12.2003 DE 10357974
(43) Date of publication of application: 23.08.2006
(73) Proprietor: REINZ-Dichtungs-GmbH, 89233 Neu-Ulm (DE)
(72) Inventor: RUESS, Bernd, 89269 Vöhringen (DE); LASKE, Matthias, 89073 Ulm (DE); DILLENZ, Friedrich, 89134 Blaustein-Herrlingen (DE); SCHNEIDER, Jürgen, 89188 Merklingen (DE)
(74) Representative: Pfenning, Meinig & Partner GbR
(86) International application number: PCT/EP2004/014111
(87) International publication number: WO 2005/059347

(56) References cited:
- WO-A-03/071167
- US-A- 5 195 365
- PATENT ABSTRACTS OF JAPAN vol. 1997, no. 11, 28 November 1997 (1997-11-28) & JP 09 195814 A (NIPPON REINZ CO LTD), 29 July 1997 (1997-07-29)

## Description

The invention relates to a metal gasket, having at least one through-opening, a sealing element, which directly surrounds this through-opening, and at least one bead. In addition, this metallic flat gasket has at least one strip conductor which functions as contact between a sensor element and a measuring value detection unit. This flat gasket is used in the production of cylinder head gaskets, in which sensor measurements of specific parameters, e.g. directly behind the sealing elements which directly surround a through-opening, are intended to be carried out.

The use of metallic sealing systems as cylinder head gasket demands above all good sealing properties so that combustion chambers, cooling and lubricant passages, screw bolts or passages for valve control parts are sealed relative to each other and to the exterior. Furthermore, recently also the technological measurement data acquisition of characteristic parameters within the metallic sealing systems has now however gained in importance. The measurement in the vicinity of the corresponding opening is hereby possible in order to achieve as exact a data acquisition as possible. The high requirements with respect to dimensioning lead therefore to the preferred use of microsensor systems.

When using sensor systems in a metallic sealing system, contacting between the sensor element and the measuring value detection unit is a critical point since, as a rule, the strip conductor, which is necessary for contacting between both units, must frequently pass through one or more bead regions. The integration of the strip conductor in the metallic sealing system has been effected to date according to the state of the art by provisional measures, which are not stable in the long term, such as e.g. by filling with sealing masses or by adhesion of the free spaces. Since the strip conductor traverses the bead, it is in force-locking connection at at least one position. The measures known from the state of the art for sealing are therefore inadequate since the strip conductor represents a local raised part in the bead region, as a result of which the strip conductor is subjected to enormous static and cyclically acting forces.

A solution to the problem of a strip conductor traversing a bead is described in DE 101 41 251. The bead is hereby embodied such that, in the region of the traversing strip conductor, it has a lower spring rate than in the remaining region. This is produced in that the bead has more resilient properties in the region of the strip conductor.

Starting herefrom, it was the object of the present invention to provide a metallic flat gasket which, in the entire region of the strip conductor, protects the latter from compression.

This object is achieved by the metallic flat gasket having the features of claim 1. The further dependent claims display advantageous developments. In claims 20 and 21, the uses of the flat gasket according to the invention are described.

According to the invention, a metallic flat gasket, having at least one gasket layer, at least one additional layer and if necessary supplementary layers is described, the gasket, additional and supplementary layers having respectively at least one through-opening. In the metallic flat gasket, at least one sensor element is integrated which is contacted by at least one strip conductor, which is guided from a sealing element, which directly surrounds the through-opening, to one of the flat gasket edges. In the gasket layer, a bead, which is guided around the strip conductor and the sensor element, is thereby configured, at the same time at least one additional layer, in the region of the strip conductor and of the sensor element, has a recess orientated towards the gasket layer. Both measures effect an essentially pressure-free embedding of the strip conductor and of the sensor element in the flat gasket. Preferably, the cylinder head gasket thereby comprises n (1 < = n < = 4) additional layers and x (x < = 4 - n) supplementary layers.

In the scope of this application, there should be understood by gasket layers, layers made of spring steel or from cold-workable steel which hardens with tempering. These layers, in addition to the sealing function which is obligatory, can also include stopper elements in addition.

There should be understood by additional layers those layers which have no restriction with respect to the metallic material. There are included in these for example spacer layers, stopper layers, further layers with a sealing function or layers which ensure a combination of these functions. Additional layers have recesses, at least over a region of their thickness, in the region of the strip conductor and/or the sensor element.

There should be understood by supplementary layers those layers which have no restriction with respect to the metallic material. There are included in these for example spacer layers, stopper layers, further layers with a sealing function or layers which ensure a combination of these functions. In contrast to the additional layers, the supplementary layers have however no recesses for the strip conductor and/or the sensor element. They can however be adapted in their topography to the gasket or additional layer adjacent thereto.

In a first variant, the recess extends over the entire thickness of the 1^{st} to the n^{th} additional layer in the form of an interruption of the additional layers.

In a second variant, the recess extends over the entire thickness of the 1^{st} to the (n-1)^{th} additional layer and only in regions over the thickness of the n^{th} additional layer.

In a further advantageous development, the first 1 to k (k < n) additional layers, which are orientated towards the gasket layer, have a recess for the sensor element and the strip conductor, whilst the (k + 1)^{th} to the n^{th} additional layers have a recess only for the sensor element. The respective recess in the k^{th} and n^{th} additional layer can hereby extend either only in regions or completely over the thickness of the relevant additional layer.

Recesses, which extend over the entire thickness of an additional layer, are introduced preferably by means of punching or laser cutting. Recesses, which extend only in regions over the thickness of an additional layer, can be produced in the additional layer for example by milling or etching. Electrolytic metal processing is possible as a further technique. Combinations of the mentioned techniques are likewise conceivable.

Preferably, the sensor element and the strip conductor are fitted in the region of the gasket layer, which is surrounded by the bead, i.e. strip conductor and sensor element are disposed on the side of the gasket layer which is orientated towards the additional layer. Thus, they can be glued for example to the gasket layer. However all further fitting methods known from the state of the art can also be used here.

Alternatively, it is however also possible that the sensor element and the conductor strip are fitted in the recess, i.e. on the side of the additional layer which is orientated towards the gasket layer and has only one recess, which extends over one region of its thickness or, in the case of recesses which extend respectively over the entire thickness of the additional layer(s), on the side, which is orientated towards the gasket layer, of the first supplementary layer which follows after the additional layer(s).

The recess can be configured preferably such that it can be filled at least partly with insulating material and/or filling material so that sealing of the strip conductor and sensor element can be produced. Likewise, it is however also possible that the region, which is surrounded by the bead, is filled with insulating material and/or filling material.

With respect to the further construction of the metallic flat gasket, further supplementary layers are conceivable which can be abut both on the gasket layer and on the additional layers. The total number of layers, i.e. the sum of a gasket layer, n additional layers and x supplementary layers is preferably at most 5.

In an advantageous development, the total thickness of the recesses in the additional layers corresponds at least to the thickness of the sensor element, within the scope of this application the thickness of the sensor element always including the thickness of the insulation which directly surrounds the sensor element.

Both a semi-bead and a full bead can be guided around the strip conductor and the sensor element.

In order to produce the metallic flat gasket, high requirements are placed on the strip conductor. Thus, strip conductor and sensor element must, on the one hand, be extremely flat in order not to interfere, in the case of a lesser total height of the gasket, with the function thereof, on the other hand, they must however also be extremely temperature-resistant. There should be understood here by temperature resistance that no damage to the strip conductor occurs in the case of the operating conditions which prevail in the engine compartment and the temperatures associated therewith.

As flat conductors, preferably conductors with a total thickness of 70 to 200 µm, particularly preferred from 90 to 150 µm, are used. Preferably, the strip conductor comprises a polyimide or polytetrafluoroethylene, an additional layer made of a conductive metal, in particular copper, with a layer thickness of 5 to 70 µm, preferably of 10 to 35 µm and particular preferred of 35 µm, is applied on said strip conductor. Polyether imide is particularly preferred as material for the strip conductor.

Preferably, also 1, 2, 3 or 4 conductors can be used as strip conductors. A further possibility resides in that the strip conductor has branches so that a plurality of sensors can be contacted simultaneously. In this case, the additional layers also have branches in the recesses.

Film conductors are therefore preferably possible for the strip conductors. Particularly preferred amongst these are FPC (flexible printed circuit) or FFC (flexible flat cable). In addition, the strip conductors can also be applied on the metallic flat gasket by means of screen printing. Methods of this type are known from the state of the art.

The metallic flat gaskets according to the invention are used on a large scale during temperature measurement at combustion chamber openings. Likewise, these metallic gasket systems can however also be used for determining further parameters at combustion chamber openings, such as e.g. travel, expansion and/or acceleration measurements.

Embodiments of the metallic flat gasket according to the invention are illustrated in the drawings and explained in more detail subsequently. The shown embodiments are only by way of example, in particular with respect to the illustrated number of layers, the arrangement of the supplementary layers, the width of the region surrounded by the bead, the dimensioning of the bead and the sealing elements used for sealing the through-openings.

There are shown:
- Figs. 1a-e: sections through different embodiments according to the invention of the metallic flat gasket.
- Figs. 2a-d: the plan view on the individual layers of a metallic cylinder head gasket according to the invention.
- Fig. 3: the plan view on a gasket according to the invention.

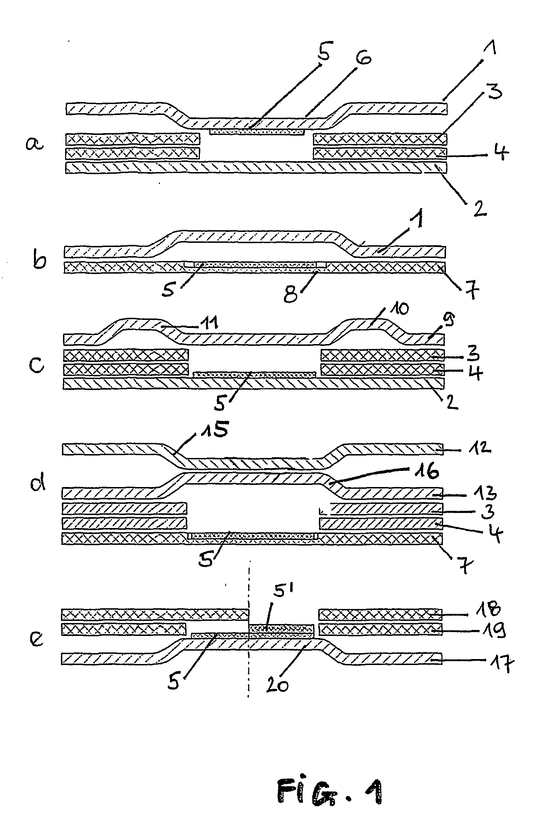

Various sections through embodiments according to the invention of the metallic flat gasket are illustrated in Figs. 1a-e.

Fig. 1a shows in part a section through a metallic flat gasket configured according to the invention.

The metallic flat gasket according to the embodiment according to Fig. 1a is constructed from a gasket layer 1 and from two additional layers 3 and 4. The additional layers 3 and 4 are thereby configured such that the recess extends in the form of an interruption of both additional layers 3 and 4. In addition to the gasket layer 1 and the additional layers 3 and 4, the illustrated gasket construction has a supplementary layer 2 on the side of the additional layer 4.

The sensor element and the strip conductor 5 are fitted in the region of the gasket layer 1, which region is surrounded by the bead. This region is surrounded by a circumferential semi-bead which is cut at two positions in Fig. 1a.

The gasket construction according to Fig. 1b comprises only one gasket layer 1 and one additional layer 7. Sensor element and strip conductor 5 are fitted in the recess 8 of the additional layer 7 which is recessed only over a region of its thickness.

Fig. 1c shows a section through a metallic flat gasket according to the invention, having one gasket layer 9, two additional layers 3 and 4 and one supplementary layer 2. The two additional layers 3 and 4 have a recess extending over their entire thickness. Sensor element and strip conductor 5 are fitted in the recess of the additional layers 3 and 4 on the supplementary layer 2. The bead is configured in this case as a full bead (10, 11). 10, 11 represent two sections through the circumferential full bead.

Fig. 1d shows a further example of a metallic cylinder head gasket according to the invention in section. The construction of this cylinder head gasket comprises one gasket layer 13, three additional layers 3, 4, 7 and one supplementary layer 12. The supplementary layer 12, which abuts against the gasket layer 13, has respectively two semi-beads 15 in order to avoid breaks, said semi-beads being disposed adjacent to the two semi-beads 16 in the gasket layer 13. The first two additional layers 3 and 4, which abut against the gasket layer 13, have in turn a recess, which extends over the entire thickness of both additional layers 3, 4, whilst the third additional layer 2 has a recess only over one part of its thickness. Sensor element and strip conductor 5 are fitted on the additional layer 7 in the recess.

A further embodiment is illustrated in part in Fig. 1e again in section. This embodiment comprises one gasket layer 17 and two additional layers 18 and 19. The strip conductor 5 and the sensor element 5' are fitted in the region which is surrounded by the bead. The left part of Fig. 1e shows a region in the vicinity of the outer edge of the gasket, through which only the strip conductor extends. The right part of Fig. 1e shows a region in the vicinity of the sealing element which surrounds the through-opening and in which the sensor element 5' is situated. Only the additional layer 19 is recessed in the region of the strip conductor 5, whilst both additional layers 18, 19 have a recess in the region of the strip conductor 5 and the sensor element 5'.

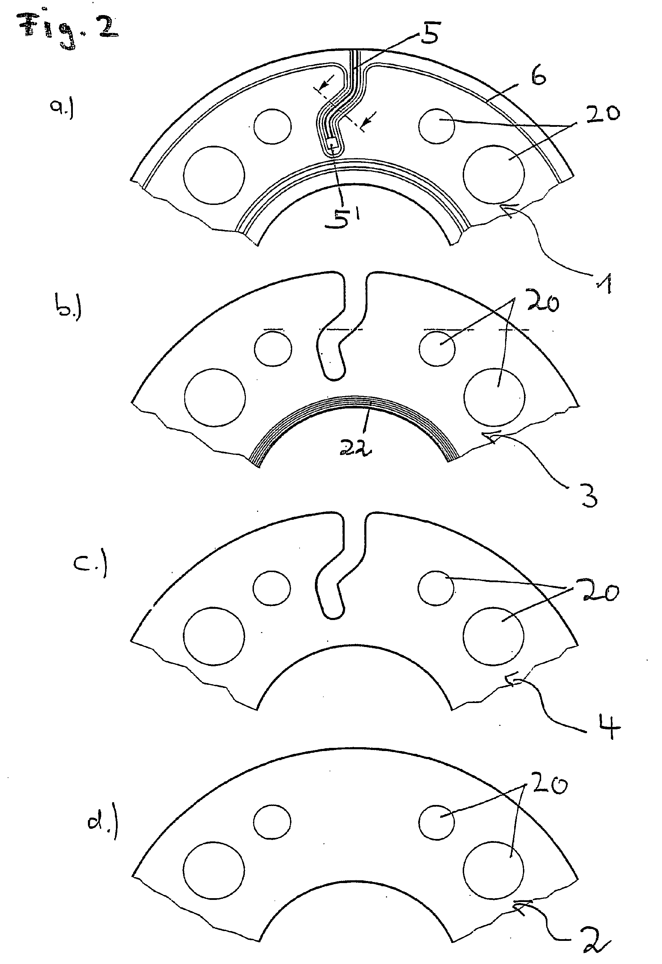

Figs. 2a - d show in plan view sections from the four layers of a metallic cylinder head gasket according to the invention, as is illustrated in cross-section in Fig. 1a.

In Fig. 2a, the gasket layer 1 from Fig. 1a is reproduced, the plan view is drawn from the direction of the adjacent layer 3. The bead 6, which extends in the outer region of the gasket layer and also surrounds the region around the strip conductor 5 and the sensor element 5', is configured as a semi-bead. The semi-bead, which delimits the region around the strip conductor 5 and the sensor element 5', extends into the vicinity of the sealing element which surrounds the combustion chamber opening, in this case a full bead. The arrows represent the section plane for Fig. 1a by way of example. The schematically illustrated water holes are designated with the reference numbers 20.

Fig. 2b shows in plan view the additional layer 3 from the gasket according to the invention which is illustrated in Fig. 1a. The recess for the sensor element and strip conductor extends from the outer edge of the additional layer into the vicinity of the combustion chamber opening. In the illustrated embodiment, an undulating stopper was chosen by way of example as deformation limiter 22 at the combustion chamber opening.

Fig. 2c shows in plan view the additional layer 4 from the gasket according to the invention which is illustrated in Fig. 1a. As in the additional layer 3, the recess for the sensor element and strip conductor extends from the outer edge of the layer into the vicinity of the combustion chamber opening.

The supplementary layer 2 of the gasket according to the invention from Fig. 1a is illustrated in Fig. 2d.

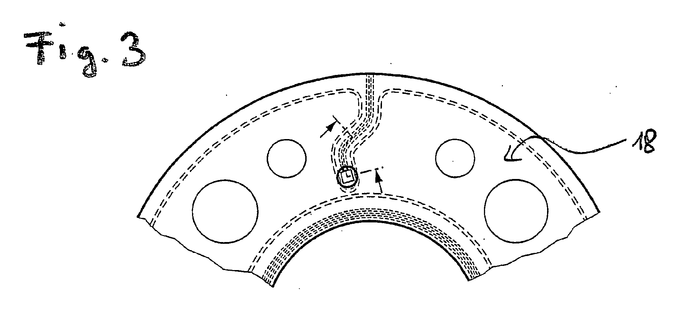

A plan view on the gasket according to the invention from Fig. 1e is reproduced in Fig. 3. The view goes from the top in the direction of the additional layer 18 which has only one recess for the sensor element. The arrows represent the two section planes of Fig. 1e, on the one hand in the region of the strip conductor (respectively in the left-hand region) and on the other hand in the region of the sensor element and associated strip conductor (respectively in the right-hand region). The broken lines in Fig. 3 indicate that this gasket according to the invention has an undulating stopper by way of example as deformation limiter in the vicinity of the combustion chamber. Likewise, it is detectable by means of the broken lines in Fig. 3 that semi-beads on the one hand are used for delimiting the region around the strip conductor and the sensor element and on the other hand for the combustion chamber seal.

The metallic flat gaskets according to the invention are used on a large scale during temperature measurement at combustion chamber openings. Likewise, these metallic gasket systems can however also be used for determining further parameters at combustion chamber openings, such as e.g. travel, expansion and/or acceleration measurements.

## Claims

1. Metallic flat gasket, having at least one gasket layer (1, 12, 13, 17), at least one additional layer (3, 4, 7, 18, 19) and if necessary a supplementary layer (2), having respectively at least one through-opening and at least one sensor (5') element which is integrated in the flat gasket and is contacted by at least one strip conductor (5),
***characterised in that***
a bead (6, 10, 11, 15), which is guided around the strip conductor (5) and the sensor element (5'), is configured in the gasket layer (1, 12, 13, 17) and the additional layer (3, 4, 7, 18, 19) has a recess, which is orientated towards the gasket layer (1, 12, 13, 17) in the region of the strip conductor (5) and of the sensor element (5'), as a result of which the sensor element (5') and the strip conductor (5) are embedded essentially pressure-free in the flat gasket.

2. Flat gasket according to claim 1,
**characterised in that** the recess extends over the entire thickness of the at least one additional layer (3, 4, 18, 19) in the form of an interruption of the additional layer.

3. Flat gasket according to claim 1,
**characterised in that** the recess extends only in regions over the thickness of the at least one additional layer (7).

4. Flat gasket according to one of the claims 1 to 3,
**characterised in that** the sensor element (5') and the strip conductor (5) are fitted in the region of the gasket layer which is surrounded by the bead (10, 11).

5. Flat gasket according to one of the claims 1 to 4,
**characterised in that** the sensor element (5') and the strip conductor (5) are fitted in the recess.

6. Flat gasket according to one of the claims 4 or 5,
**characterised in that** the fitting is effected e.g. by means of gluing, welding or soldering.

7. Flat gasket according to one of the claims 1 to 6,
**characterised in that** the recess is filled at least partly with insulating material and/or filling material.

8. Flat gasket according to one of the claims 1 to 6,
**characterised in that** the region which is surrounded by the bead (10, 11) is filled at least partly with insulating material and/or filling material.

9. Flat gasket according to one of the claims 1 to 8,
**characterised in that** an additional layer (7) has a recess which extends only in regions over its thickness and the further additional layers (3, 4, 18, 19) have a recess over their entire thickness.

10. Flat gasket according to one of the claims 1 to 9,
**characterised in that** at least one additional layer has a recess for the sensor element (5') and the strip conductor (5) and the further additional layers have a recess only for the sensor (5') element.

11. Flat gasket according to one of the claims 1 to 10,
**characterised in that** the total thickness of the recesses in the additional layers corresponds at least to the thickness of the sensor (5').

12. Flat gasket according to one of the claims 1 to 11,
**characterised in that** the bead (6) is a semi-bead.

13. Flat gasket according to one of the claims 1 to 11,
**characterised in that** the bead (6) is a full bead.

14. Flat gasket according to one of the claims 1 to 13,
**characterised in that** the strip conductor has a thickness of 70 to 200 µm, preferably of 90 to 150 µm.

15. Flat gasket according to one of the claims 1 to 14,
**characterised in that** the strip conductor (5) is a film conductor.

16. Flat gasket according to one of the claims 1 to 15,
**characterised in that** the strip conductor (5) comprises a polytetrafluoroethylene or a polyimide.

17. Flat gasket according to one of the claims 1 to 16,
**characterised in that** the strip conductor (5) comprises a polytetrafluoroethylene or polyether imide and an additional layer made of a conductive metal, in particular copper, with a layer thickness of 5 to 70 µm, preferably of 10 to 35 µm and particularly preferred of 35 µm, is applied on said strip conductor (5).

18. Flat gasket according to one of the claims 1 to 17,
**characterised in that** the strip conductors (5) comprise 1, 2, 3 and/or 4 conductors.

19. Flat gasket according to one of the claims 1 to 18,
**characterised in that** the strip conductor (5), the bead and/or the recesses have branches, via which a plurality of sensors (5') can be contacted.

20. Use of the metallic flat gasket according to one of the claims 1 to 19 for temperature measurements at combustion chamber openings.

21. Use of the metallic flat gasket according to one of the claims 1 to 19 for travel, expansion and/or acceleration measurements at combustion chamber openings.

## Patentansprüche

1. Metallische Flachdichtung mit mindestens einer Dichtungslage (1, 12, 13, 17), mindestens einer Zusatzlage (3, 4, 7, 18, 19) und gegebenenfalls einer Ergänzungslage (2) mit jeweils mindestens einer Durchgangsöffnung sowie mit mindestens einem in die Flachdichtung integrierten Sensorelement (5'), das mit mindestens einer Leiterbahn (5) kontaktiert ist,
**dadurch gekennzeichnet,**
**dass** in der Dichtungslage (1, 12, 13, 17) eine um die Leiterbahn (5) und das Sensorelement herum geführte Sicke (6, 10, 11, 15) ausgebildet ist und die Zusatzlage (3, 4, 7, 18, 19) im Bereich der Leiterbahn und des Sensorelements eine der Dichtungslage (1, 12, 13, 17) zugewandte Aussparung aufweist, wodurch das Sensorelement (5') und die Leiterbahn (5) im Wesentlichen druckfrei in die Flachdichtung eingebettet sind.

2. Flachdichtung nach Anspruch 1,
**dadurch gekennzeichnet, dass** sich die Aussparung über die gesamte Dicke der mindestens einen Zusatzlage (3, 4, 18, 19) in Form einer Unterbrechung der Zusatzlage erstreckt.

3. Flachdichtung nach Anspruch 1,
**dadurch gekennzeichnet, dass** sich die Aussparung nur bereichsweise über die Dicke der mindestens einen Zusatzlage (7) erstreckt.

4. Flachdichtung nach einem der Ansprüche 1 bis 3, **dadurch gekennzeichnet, dass** das Sensorelement (5') und die Leiterbahn (5) im von der Sicke (10, 11) umschlossenen Bereich der Dichtungslage angebracht sind.

5. Flachdichtung nach einem der Ansprüche 1 bis 4, **dadurch gekennzeichnet, dass** das Sensorelement (5') und die Leiterbahn (5) in der Aussparung angebracht sind.

6. Flachdichtung nach einem der Ansprüche 4 oder 5, **dadurch gekennzeichnet, dass** die Befestigung z.B. mittels Kleben, Schweißen oder Löten erfolgt.

7. Flachdichtung nach einem der Ansprüche 1 bis 6, **dadurch gekennzeichnet, dass** die Aussparung zumindest teilweise mit Isoliermasse und/oder Füllmasse gefüllt ist.

8. Flachdichtung nach einem der Ansprüche 1 bis 6, **dadurch gekennzeichnet, dass** der von der Sicke (10, 11) umschlossene Bereich zumindest teilweise mit Isoliermasse und/oder Füllmasse gefüllt ist.

9. Flachdichtung nach einem der Ansprüche 1 bis 8, **dadurch gekennzeichnet, dass** eine Zusatzlage (7) eine Aussparung, die sich nur bereichsweise über deren Dicke erstreckt und die weiteren Zusatzlagen (3, 4, 18, 19) eine Aussparung über deren gesamten Dicke aufweisen.

10. Flachdichtung nach einem der Ansprüche 1 bis 9, **dadurch gekennzeichnet, dass** mindestens eine Zusatzlage eine Aussparung für das Sensorelement (5') und die Leiterbahn (5) aufweist und die weiteren Zusatzlagen eine Aussparung nur für das Sensorelement (5') aufweisen.

11. Flachdichtung nach einem der Ansprüche 1 bis 10, **dadurch gekennzeichnet, dass** die Gesamtdicke der Aussparungen in den Zusatzlagen mindestens der Dicke des Sensors (5') entspricht.

12. Flachdichtung nach einem der Ansprüche 1 bis 11, **dadurch gekennzeichnet, dass** die Sicke (6) eine Halbsicke ist.

13. Flachdichtung nach einem der Ansprüche 1 bis 11, **dadurch gekennzeichnet, dass** die Sicke (6) eine Vollsicke ist.

14. Flachdichtung nach einem der Ansprüche 1 bis 13, **dadurch gekennzeichnet, dass** die Leiterbahn eine Dicke von 70 bis 200 µm, bevorzugt von 90 bis 150 µm aufweist.

15. Flachdichtung nach einem der Ansprüche 1 bis 14, **dadurch gekennzeichnet, dass** die Leiterbahn (5) ein Folienleiter ist.

16. Flachdichtung nach einem der Ansprüche 1 bis 15, **dadurch gekennzeichnet, dass** die Leiterbahn (5) ein Polytetrafluorethylen oder ein Polyimid enthält.

17. Flachdichtung nach einem der Ansprüche 1 bis 16, **dadurch gekennzeichnet, dass** die Leiterbahn (5) Polytetrafluorethylen oder Polyetherimid enthält und auf dieser Leiterbahn (5) eine zusätzliche Schicht aus einem leitfähigen Metall, insbesondere Kupfer, mit einer Schichtdicke von 5 bis 70 µm, bevorzugt von 10 bis 35 µm und besonders bevorzugt von 35 µm aufgebracht ist.

18. Flachdichtung nach einem der Ansprüche 1 bis 17, **dadurch gekennzeichnet, dass** die Leiterbahnen (5) 1, 2, 3 und/oder 4 Leiter aufweisen.

19. Flachdichtung nach einem der Ansprüche 1 bis 18, **dadurch gekennzeichnet, dass** die Leiterbahn (5), die Sicke und/oder die Aussparungen Verästelungen aufweisen, über die eine Vielzahl von Sensoren (5') kontaktierbar sind.

20. Verwendung der metallischen Flachdichtung nach einem der Ansprüche 1 bis 19 für Temperaturmessungen an Brennraumöffnungen.

21. Verwendung der metallischen Flachdichtung nach einem der Ansprüche 1 bis 19 für Weg-, Dehnungs- und/oder Beschleunigungsmessungen an Brennraumöffnungen.

## Revendications

1. Garniture d'étanchéité métallique plate, comportant au moins une couche de garniture d'étanchéité (1, 12, 13, 17), au moins une couche supplémentaire (3, 4, 7, 18, 19) et, si nécessaire, une couche complémentaire (2), comportant respectivement au moins une ouverture traversante et au moins un élément formant capteur (5') qui est intégré dans la garniture d'étanchéité plate et avec lequel au moins un conducteur en bande (5) est en contact,
**caractérisée en ce que**
un cordon (6, 10, 11, 15), qui est guidé autour du conducteur en bande (5) et de l'élément formant capteur (5'), est configuré dans la couche de garniture d'étanchéité (1, 12, 13, 17) et la couche supplémentaire (3, 4, 7, 18, 19) comporte un évidement, qui est orienté vers la couche de garniture d'étanchéité (1, 12, 13, 17) dans la région du conducteur en bande (5) et de l'élément formant capteur (5'), en conséquence de quoi l'élément formant capteur (5') et le conducteur en bande (5) sont incorporés essentiellement sans pression dans la garniture d'étanchéité plate.

2. Garniture d'étanchéité plate selon la revendication 1,
**caractérisée en ce que** l'évidement s'étend sur l'épaisseur entière de ladite au moins une couche supplémentaire (3, 4, 7, 18, 19) sous la forme d'une interruption de la couche supplémentaire.

3. Garniture d'étanchéité plate selon la revendication 1,
**caractérisée en ce que** l'évidement s'étend seulement dans des parties de l'épaisseur de ladite au moins une couche supplémentaire (7).

4. Garniture d'étanchéité plate selon l'une des revendications 1 à 3,
**caractérisée en ce que** l'élément formant capteur (5') et le conducteur en bande (5) sont installés dans la région de la couche de garniture d'étanchéité qui est entourée par le cordon (10, 11).

5. Garniture d'étanchéité plate selon l'une des revendications 1 à 4,
**caractérisée en ce que** l'élément formant capteur (5') et le conducteur en bande (5) sont installés dans l'évidement.

6. Garniture d'étanchéité plate selon l'une des revendications 4 ou 5,
**caractérisée en ce que** l'installation est effectuée, par exemple, par collage, soudage ou brasage.

7. Garniture d'étanchéité plate selon l'une des revendications 1 à 6,
**caractérisée en ce que** l'évidement est rempli au moins partiellement d'un matériau isolant et/ou d'un matériau de remplissage.

8. Garniture d'étanchéité plate selon l'une des revendications 1 à 6,
**caractérisée en ce que** la région qui est entourée par le cordon (10, 11) est remplie au moins partiellement d'un matériau isolant et/ou d'un matériau de remplissage.

9. Garniture d'étanchéité plate selon l'une des revendications 1 à 8,
**caractérisée en ce qu'**une couche supplémentaire (7) comporte un évidement qui s'étend seulement dans des parties de son épaisseur et les autres couches supplémentaires (3, 4, 18, 19) comportent un évidement sur leur épaisseur entière.

10. Garniture d'étanchéité plate selon l'une des revendications 1 à 9,
**caractérisée en ce qu'**au moins une couche supplémentaire comporte un évidement pour l'élément formant capteur (5') et le conducteur en bande (5) et les autres couches supplémentaires comportent un évidement uniquement pour l'élément formant capteur (5').

11. Garniture d'étanchéité plate selon l'une des revendications 1 à 10,
**caractérisée en ce que** l'épaisseur totale des évidements dans les couches supplémentaires correspond au moins à l'épaisseur du capteur (5').

12. Garniture d'étanchéité plate selon l'une des revendications 1 à 11,
**caractérisée en ce que** le cordon (6) est un semi-cordon.

13. Garniture d'étanchéité plate selon l'une des revendications 1 à 11,
**caractérisée en ce que** le cordon (6) est un cordon complet.

14. Garniture d'étanchéité plate selon l'une des revendications 1 à 13,
**caractérisée en ce que** le conducteur en bande a une épaisseur de 70 à 200 µm, de préférence de 90 à 150 µm.

15. Garniture d'étanchéité plate selon l'une des revendications 1 à 14,
**caractérisée en ce que** le conducteur en bande (5) est un conducteur en film.

16. Garniture d'étanchéité plate selon l'une des revendications 1 à 15,
**caractérisée en ce que** le conducteur en bande (5) comprend du polytétrafluoroéthylène ou du polyimide.

17. Garniture d'étanchéité plate selon l'une des revendications 1 à 16,
**caractérisée en ce que** le conducteur en bande (5) comprend du polytétrafluoroéthylène ou du polyéthérimide et **en ce qu'**une couche supplémentaire réalisée en un métal conducteur, en particulier du cuivre, avec une épaisseur de couche de 5 à 70 µm, de préférence de 10 à 35 µm, et particulièrement préférée de 35 µm, est appliquée sur ledit conducteur en bande (5).

18. Garniture d'étanchéité plate selon l'une des revendications 1 à 17,
**caractérisée en ce que** les conducteurs en bande (5) comprennent 1, 2, 3 et/ou 4 conducteurs.

19. Garniture d'étanchéité plate selon l'une des revendications 1 à 18,
**caractérisée en ce que** le conducteur en bande (5), le cordon et/ou les évidements comportent des branchements, par lesquels une pluralité de capteurs (5') peuvent être mis en contact.

20. Utilisation de la garniture d'étanchéité métallique plate selon l'une des revendications 1 à 19 pour des mesures de température aux ouvertures d'une chambre de combustion.

21. Utilisation de la garniture d'étanchéité métallique plate selon l'une des revendications 1 à 19 pour des mesures de déplacement, de dilatation et/ou d'accélération aux ouvertures d'une chambre de combustion.
